(19) **Europäisches Patentamt / European Patent Office / Office européen des brevets**

(11) **EP 1 755 327 B1**

(12) **EUROPEAN PATENT SPECIFICATION**

(45) Date of publication and mention
of the grant of the patent:
**19.03.2014 Bulletin 2014/12**

(51) Int Cl.:
*H04N 1/00* *(2006.01)*  *G07D 7/20* *(2006.01)*
*G06T 7/60* *(2006.01)*

(21) Application number: **06119072.4**

(22) Date of filing: **17.08.2006**

(54) **Detection of document security marks using run profiles**

Detektion von Sicherheitsmerkmalen unter Einsatz von Lauflängenprofilen

Détection de marques de sécurité d'un document à l'aide de profils de codage des répétitions

(84) Designated Contracting States:
**DE FR GB**

(30) Priority: **17.08.2005 US 205830**

(43) Date of publication of application:
**21.02.2007 Bulletin 2007/08**

(73) Proprietor: **Xerox Corporation**
**Rochester,**
**New York 14644 (US)**

(72) Inventor: **Fan, Zhigang**
**Webster, NY 14580 (US)**

(74) Representative: **Grünecker, Kinkeldey,**
**Stockmair & Schwanhäusser**
**Leopoldstrasse 4**
**80802 München (DE)**

(56) References cited:
**EP-A2- 1 059 800    US-A1- 2005 013 599**
**US-B1- 6 272 248**

• **THEODORIDIS S; KOUTROUMBAS K: "PATTERN RECOGNITION," 1999, ACADEMIC PRESS, US , SAN DIEGO, CA , XP002405837 * page 239 - page 241 ***

**Description**

BACKGROUND

The present application relates to the digital image processing arts. More particularly, the application relates to a method and apparatus for preventing or inhibiting effective reproduction of documents such as currency, checks, stock certificates, and any other printed document having a pre-defined security mark printed therein. The method and apparatus operate to provide a multi-step review of digital image data derived from a printed document to be reproduced in order to locate any potential security marks and to examine the potential security mark(s) further in an effort to identify a potential security mark as an actual security mark. If an actual security mark is identified, effective reproduction of the printed document is not permitted and/or other security measures are taken.

The proliferation of digital image processing systems, such as digital color copiers, that are able to make very high quality reproductions or "copies" of color documents at a low cost has led to use of these machines by criminals for reproduction of currency, checks, stock certificates, legal documents, and other printed documents not legally reproducible. Obviously, any reproductions of these documents are counterfeit and illegal.

U.S. Patent No. 6,580,820 resp. EP-A-1059800 and U.S. Patent No. 6,542,629 disclose a method for detecting Security Circle (SC) Common Marks and other security marks in order to prevent counterfeiting. The security marks are defined according to standards and, as such, the color and dimensions of the mark components, as well as the position of each mark component relative to the other mark components, are known. According to these patents, the detection comprises four main steps: binarization; micro-detection, macro-detection; and, verification. The binarization step extracts a bitmap from the input image data based upon color, with pixels of the bitmap set to "on" if they are close to the known color of the security mark. The micro-detection step operates on the bitmap data to identify potential mark constituents. The macro-detection step examines the relationship of the potential mark constituents to each other to determine if a potential security mark is present. The verification step provides a final check of potential security marks for added certainty of mark detection, in an effort to prevent false positives.

In a typical case, digital image processing functions of an image printing/reproduction apparatus are performed by a programmed general purpose computer in combination with some special purpose hardware. The former is referred to as "software" while the latter is referred to as "hardware." The hardware is mainly implemented for computationally intensive functions to enhance performance in terms of processing speed. The hardware is typically operated in "video" fashion, where only a few scanlines of data are buffered, to minimize use of expensive data storage hardware. For low speed (lower priced) machines, pure software processing can be used, but mid/high range machines require hardware implementation of computationally intensive image processing operations in order to meet the speed specifications demanded by users.

With reference again to the 6,580,820 and 6,542,629 patents, the most computationally intensive aspects of the security mark detection technique are the two steps of the micro-detection phase, i.e., connected component extraction and template matching. Furthermore, each of these steps are expensive to implement in hardware, as both require substantial scanline buffering storage (in the case of SC Common Marks, at least D scanlines, where D is the diameter of the circles to be detected). Consequently, in mid/high range machines, in which a pure software solution cannot meet required speed specifications, implementing the micro-detection phase can be expensive.

Further examples of image processing methods can be found in US 2005/0013599 A1 and US 6,272,248 B1.

In light of these limitations associated with known methods and apparatus, it has been deemed desirable to provide a method and apparatus for the detection of document security marks that combines hardware and software processing in a cost-effective manner while meeting all speed performance specifications.

SUMMARY

The scope of protection of the present invention is defined by the subject-matter of the independent claims.

In a further embodiment step (e) in claim 1 comprises, for each potential mark constituent:

establishing a neighborhood about the potential mark constituent;
counting the number of potential mark constituents located in the neighborhood;
comparing the number of potential mark constituents in the neighborhood to the known quantity of potential mark constituents used to define an actual security mark; and
identifying a neighborhood as a potential security mark if the number of potential mark constituents therein is equal to or greater than the number of actual mark constituents required to define an actual security mark.

According to the present invention step (f) in claim 1 of identifying an actual security mark comprises:

comparing all potential mark constituents of a potential security mark to each other and identifying a potential security mark as an actual security mark if the potential mark constituents defining the potential security mark are uniform relative to each other in terms of at least color and size.

In a further embodiment said neighborhood established about each potential mark constituent has a radius based upon a predefined maximum distance between any two actual mark constituents defining an actual security mark in said printed document.

In a further embodiment the digital image processing method further comprises, prior to identifying a neighborhood as a potential security mark:

determining the distances between potential mark constituents in said neighborhood; and
identifying a neighborhood as a potential security mark only if the distances between potential mark constituents define a superset of distances between actual mark constituents of an actual security mark in said printed document.

In accordance with another aspect of the present development, a document reproduction apparatus includes: means for scanning a printed document to derive color digital image data representative of the printed document; means for identifying all features represented by the digital image data as having a color encompassed by a select color range used to define a security mark in the printed document; means for identifying the features as suspect component features only if the features define a select run profile; means for identifying a suspect component feature as a potential mark constituent if the suspect component feature has both a size and shape corresponding to a known size and shape of an actual mark constituent used to define the security mark in the printed document; means for establishing a neighborhood of a select size about each potential mark constituent; means for identifying as a potential security mark all neighborhoods comprising a number of potential mark constituents greater than or equal to a minimum number of the actual mark constituents required to define a security mark, with the potential mark constituents arranged relative to each other in a manner corresponding to the actual mark constituents defining the security mark in said printed document; means for processing the digital image data of each neighborhood identified as a potential security mark to identify the potential security mark as an actual security mark if the potential mark constituents in the neighborhood are uniform in terms of at least size and color; and, means for preventing effective reproduction of the printed document if the digital image data includes an actual security mark.
In a further embodiment said means for identifying said features as suspect component features only if said features define a select run profile comprises:

means for analyzing each scanline using a plurality of overlapping windows;
means for detecting a number of pixel runs in each of said plurality of windows;
means for implementing a plurality of finite automatons to track the number of pixel runs detected in the plurality of windows, respectively, as each window processes pixels from all successive scanlines of said bitmap.

BRIEF DESCRIPTION OF DRAWINGS

The development may take form in various steps and arrangements of steps, and in various components and arrangements of components. The drawings are only for purposes of illustrating preferred embodiments, and it is not intended that they be construed to limit the development in any way.

FIGURE 1 is a block diagram illustrating an image processing system in accordance with the present invention;
FIGURE 2A illustrates a printed document such as a currency note, including a security mark;
FIGURES 2B and 2C show enlarged portions of the document illustrated in FIGURE 2A for purposes of showing the features of the security mark;
FIGURE 3 is a flow-chart illustrating an overall digital image processing method for detecting document security marks in accordance with the present invention;
FIGURE 4 is a more detailed flow-chart illustrating a digital image processing method of detecting document security marks in accordance with the present invention;
FIGURE 5A is a flow-chart illustrating the binarization step of a digital image processing method for detection of document security marks in accordance with the present invention;
FIGURE 5B illustrates the binary data (bitmap) resulting from application of the binarization method of FIGURE 5A to the digital image data obtained from the printed document of FIGURE 2A;
FIGURE 6A is a flow-chart illustrating the micro-detection step of a digital image processing method for detecting document security marks in accordance with the present invention;
FIGURE 6B diagrammatically illustrates evaluation of suspect component size in accordance with the present invention;

FIGURE 6C diagrammatically illustrates a suspect component template matching operation in accordance with the present development;

FIGURE 6D illustrates a run profile analysis used to identify suspect components;

FIGURE 6E illustrates a finite automaton (finite state machine) useable to perform the run profile analysis;

FIGURE 6F illustrates the portions of the bitmap of FIGURE 5B that have been identified as potential constituents of a security mark in the printed document of FIGURE 2A;

FIGURE 7A is a flow-chart illustrating a macro-detection operation of a digital image processing method for detecting document security marks in accordance with the present development;

FIGURE 7B illustrates the portions of the bitmap of FIGURE 5B that correspond to potential security marks in the printed document of FIGURE 2A;

FIGURE 8 illustrates a verification operation of a digital imaging method for detecting document security marks in accordance with the present development;

FIGURE 9 is a flow-chart illustrating control of the digital image processing system to prevent effective duplication of a document including a security mark.

## DETAILED DESCRIPTION

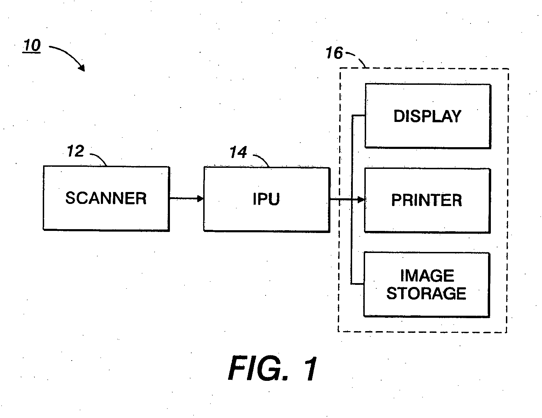

A digital image processing system 10 in accordance with the present invention is shown in FIGURE 1. An image input scanner 12 derives and delivers digital image data in the form of one or more monochromatic separations, wherein the picture elements or pixels of each separation are defined at a depth of d bits per pixel where d is an integer. Accordingly, each pixel of each separation is defined in terms of d bits per pixel (bit depth = d), and each pixel has some gray value between full off and full on. Regardless of the depth d at which each pixel is defined, the location of each pixel in each separation bitmap is also defined, typically in terms of a row "n" and a column "m." When the digital image data is provided in terms of a single monochromatic separation, the image is monochromatic, for example, so called black-and-white image data. On the other hand, when the digital image data is provided in terms of two or more monochromatic separations, a color image results when the data from the separations are combined, e.g., red-green-blue (RGB) separations or cyan-magenta-yellow (CMY) separations.

The image signals are input from the scanner 12 to an image processing unit 14 wherein digital image processing, such as security mark identification in accordance with the present development, is performed. The image processing unit 14 may be provided by any suitable electronic computing apparatus such as an electronic computer, a dedicated electronic circuit, and/or any other suitable electronic circuit means including the hardware and software processing structures and methods discussed above. The image processing unit 14 outputs data in a suitable format to an image output terminal 16 such as a digital printer and/or visual display.

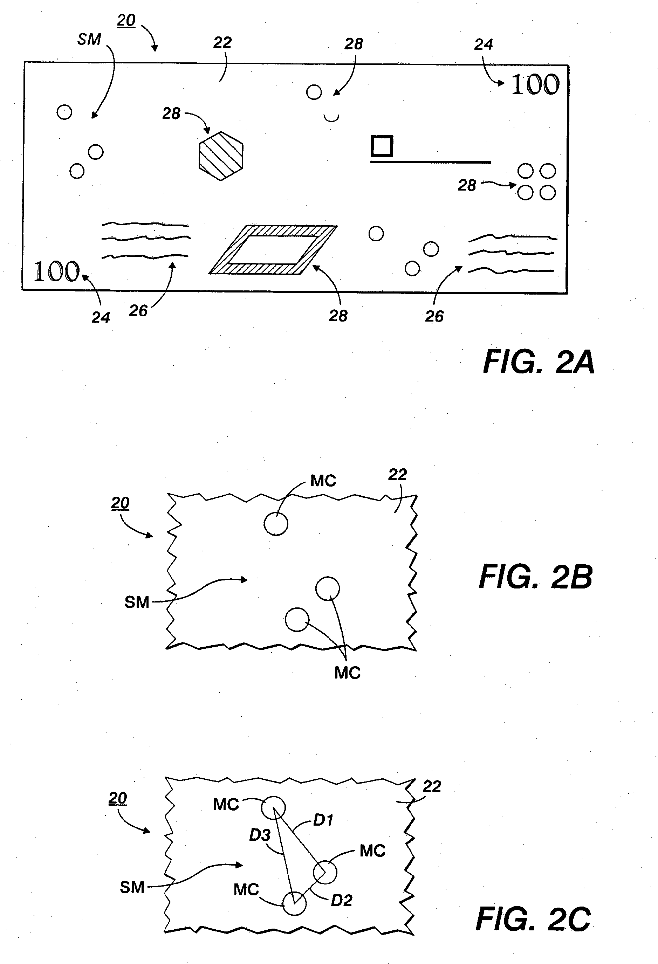

Figure 2A illustrates a printed currency note including a security mark SM imprinted or otherwise included thereon. The illustrated currency note and security mark are for ease of illustrating the development only, and those of ordinary skill in the art will recognize that the development is equally applicable to any type of document including any suitable security mark thereon. As noted, checks, stock certificates, bonds, and legal documents are some other examples of documents that may include security marks and that may, consequently, be protected from unauthorized reproduction according to the present development. The currency note 20 is printed on paper 22 or other suitable substrate and comprises various markings, such as denomination markings 24, text 26, various decorative images and designs 28, and a security mark SM used to identify the currency note 20 as an authentic document. As illustrated and described herein, the security mark SM is printed in the same or similar manner on the document 20 as the information 24, 26, 28, using ink having the color required by the security mark definition.

With reference now to FIGURES 2B and 2C, the portion of the currency note 20 including the security mark SM is illustrated and greatly enlarged to show the characteristics of the security mark SM used in the present example. As noted, in practice, the security mark will likely take any one of a wide variety of alternative forms, and the invention is not to be limited to the illustrated or any other particular security mark. In the present example, the security mark SM is defined on the note 20 (according to a definition promulgated by the appropriate authorities) by three identical mark constituents MC (the mark constituents MC are circular in the illustrated example), each having identical size, shape, color and run profile according to the security mark definition. Also, the mark constituents MC are arranged in a select pattern or arrangement as required by the definition of the security mark SM. As illustrated herein, the mark constituents MC are circular and arranged at the vertices of a right triangle. The mark constituents MC are separated from each other by the distances D1, D2, D3, to define the security mark SM further as having a select overall size and shape.

The apparatus and method in accordance with the present invention operate the image processing unit 14 to detect the existence of a security mark SM in a document such as the note 20 scanned by the image input scanner 12 so that the image processing unit 14 can prevent or inhibit unauthorized reproduction of the note 20 or other document being scanned. Those of ordinary skill in the art will also recognize that the subject method and apparatus may be used to determine the authenticity of a document even if no copy of the document is desired.

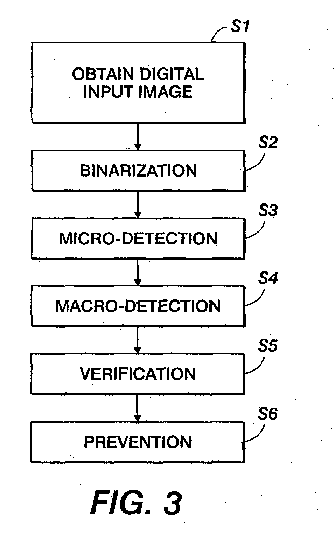

With reference now to FIGURE 3, a preferred digital image processing method for detection of document security marks is illustrated in accordance with the present invention. The security mark detection method as implemented using the digital imaging processing system 10 comprises: S1 - obtaining a digital input image, typically through use of the image input scanner 12; S2 - binarization of the digital input image; S3 - micro-detection; S4 - macro-detection; S5 - verification; and S6 - prevention of the effective reproduction of the input document if a security mark is found. The operations S2 through S6 are preferably carried out in the image processing unit 14.

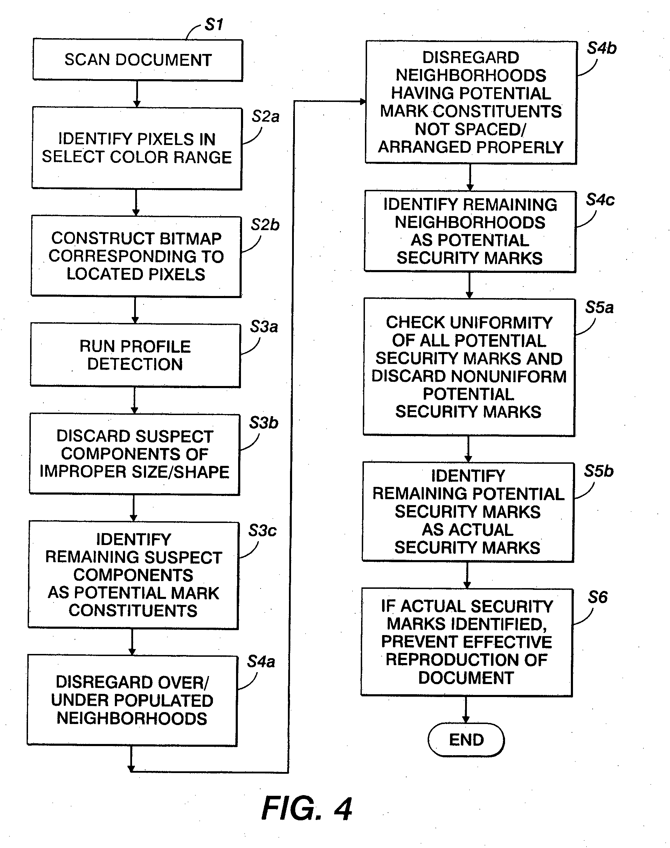

The operations S1-S6 are illustrated in further detail in FIGURE 4. The step S1 comprises scanning a printed document, such as the currency note 20, using the input image scanner 12 to derive color digital image data in terms of one or more multiple color separations in a suitable color space, e.g., red, green, blue (RGB), or the like. The scanner 12 may derive or deliver the digital image data in terms of any other suitable color space.

The binarization step S2 comprises a first sub-step S2a of identifying all pixels in the input digital image as derived by the scanner 12 having, i.e., representing, a color in a select range. A second sub-step S2b constructs a bitmap 30 corresponding to all pixels of the input digital image identified as having a color in the select range.

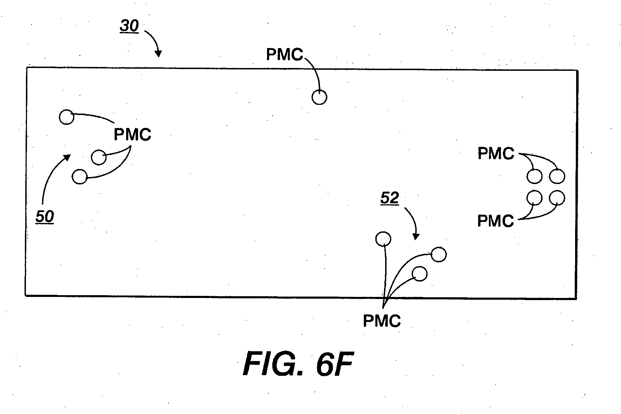

The micro-detection operation S3 comprises sub-steps S3a-S3c. More particularly, in a step S3a, a run profile detection operation is performed on the bitmap 30 derived from the binarization operation S2 to identify all image features of the bitmap (where a "feature" is a group of spatially neighboring "on" pixels as explained further below) having a run profile corresponding to the known run profile of mark constituent MC. Only the image features identified in step S3a (referred to below as "suspect components") are further analyzed. In a step S3b, suspect components that have a size or shape not corresponding to the known size and shape a mark constituent MC are discarded. Remaining suspect components are identified as potential mark constituents PMC (FIG. 6F) in a step S3c.

The remaining aspects of the security mark detection method/apparatus correspond to the method/apparatus disclosed in the aforementioned U.S. Patent Nos. 6,580,820 and 6,542,629 as described above. In particular, in a macro-detection operation S4, neighborhoods of potential mark constituents that are over-populated or under-populated relative to the required number of mark constituents MC that define a security mark SM are disregarded (step S4a). All remaining neighborhoods having potential mark constituents that are not properly spaced from or arranged relative to their neighbor potential mark constituents, as required to define an actual security mark SM, are also disregarded (step S4b), and only those neighborhoods still remaining are identified as potential security marks (step S4c).

The verification step S5 is then performed. In particular, all potential security marks are further analyzed for uniformity, e.g., uniformity of color, uniformity of size, and those that are not sufficiently uniform are discarded (step S5a). Any remaining potential security marks are positively identified as actual security marks SM (step S5b). If an actual security mark SM is identified, the image processing unit 14, in a step S6, prevents effective duplication of the document scanned on the image input scanner 12, e.g., by completely terminating the digital image processing operation, outputting a black or blank printed page, inserting a "VOID" or "COPY" watermark or the like in the output data sent to the image output device 16, or by otherwise failing to output an exact replica of the input document, such as the currency note 20.

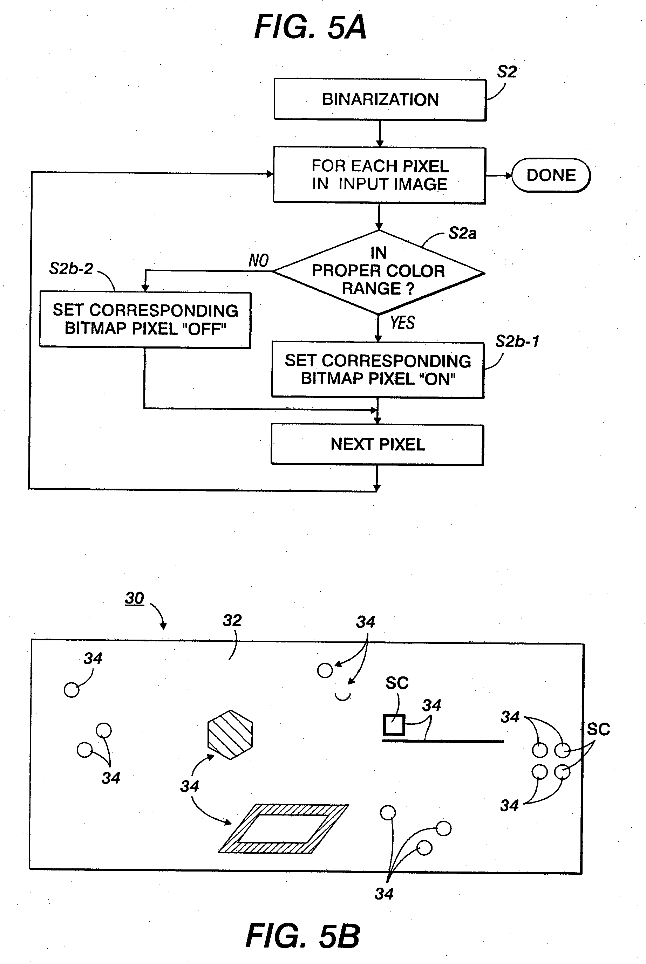

The operations S1-S6 will now be described in further detail with reference to the currency note 20 and FIGS. 5A-9. In accordance with the operation S1, the currency note 20 is scanned to obtain digital image data representing same in a suitable color space, e.g., RGB data. This digital image data is fed to the image processing unit 14 for carrying out the operations S2-S6 in accordance with the present development.

With reference to FIGURES 5A and 5B, the binarization operation S2 comprises constructing a bitmap 30 defined by a plurality of pixels corresponding respectively in location to the plurality of pixels defining the input digital image of the currency note 20. To construct the bitmap 30, the color of each pixel defined by the input digital image is examined by the sub-step S2a to identify each pixel having the same color as the known color used to define the actual mark constituents MC. This is typically implemented using a range of color values that approximate the known color used to define the actual mark constituents MC, where any color value that falls within the range is deemed to have the same color as the known color value used to define the actual mark constituents MC. For each pixel of input image data in the proper color range, a sub-step S2b-1 sets the correspondingly located pixel in the bitmap to 1 or "on." All other pixels in the bitmap are set to 0 or "off" by the sub-step S2b-2 (an initialization sub-step can be used to set all pixels in the bitmap 30 "off" prior to the color-checking sub-step S2a in which case the step S2b-2 can be skipped). Using the binary digits "1" and "0" to represent "on" and "off" conditions corresponds with conventional computer science notation. Of course, the binary digits "0" and "1" may alternatively represent "on" and "off," respectively, and the invention is not intended to be limited to either notation.

Those of ordinary skill in the art will also recognize that many different methods exist for determining if a color of a pixel defined by values selected from a particular color space falls within a select color range, i.e., whether the color defined for a pixel in a particular color space is "close enough" to a desired color in accordance with step S2a. If the distance of the actual color from the desired color is greater than a color range threshold T, then the actual color is outside of the range and not "close enough" to the desired color. For example, if the pixels of the input digital image representing the currency note 20 are each defined by the actual red, green, and blue values (R,G,B), and if a pixel of a desired color is defined by desired red, green, blue values (R', G', B'), then the distance of the color defined by the actual red, green, blue values R,G,B from the desired color defined by the red, green blue values (R',G',B') may be calculated and compared to the threshold T according to:

$$T \geq \sqrt{(R-R')^2 + (G-G')^2 + (B-B')^2}$$

Of course, those of ordinary skill in the art will recognize that alternative methods exist for determining whether a color value of a pixel of a digital image is within a select color range. The preferred method will vary depending upon the particular color space by which the pixel is defined. It is not intended that the present application be limited to any particular color comparison method or any particular color space.

Referring now more particularly to FIGURE 5B, the bitmap 30 resulting from binarization S2 of the input digital image derived by the scanner 12 for the currency note 20 is illustrated. For each pixel of the input digital image derived by the scanner that represents a color in a select color range encompassing the color used to print the security mark SM, the bitmap 30 is defined by a correspondingly located "on" pixel. One or more of these "on" pixels are generally identified at 34 in FIGURE 5B. Likewise, all other pixels defining the bitmap remain or are set to an "off" condition. These "off" pixels are collectively identified at 32 in FIGURE 5B. Accordingly, the bitmap 30 includes or identifies only those pixels from the input digital image that represent a color in the select color range that approximates the known actual color of the constituents MC of the security mark SM.

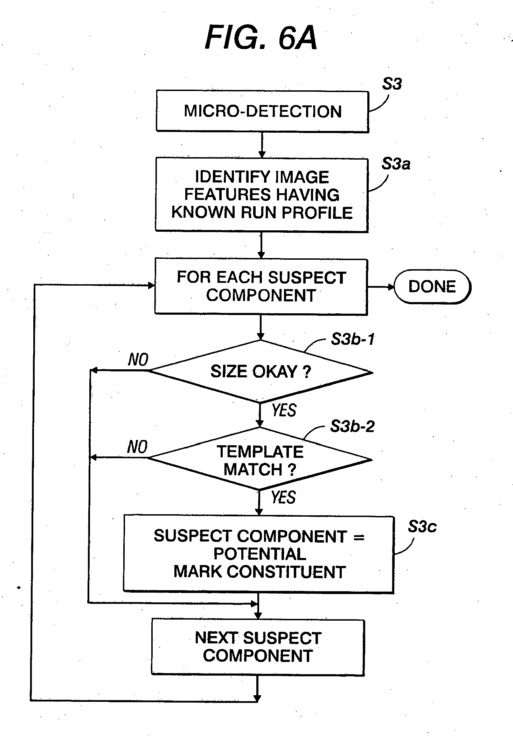

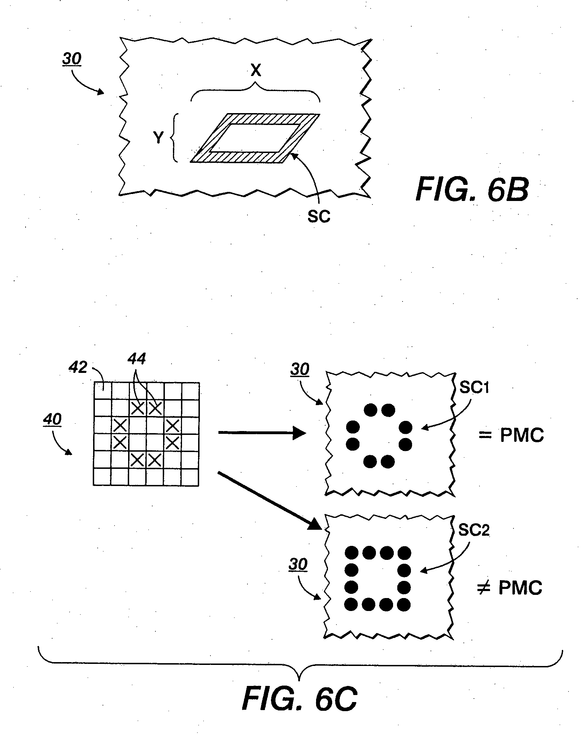

The bitmap 30 is further processed according to the micro-detection operation S3 as illustrated in FIGURES 6A-6D. A first sub-step S3a identifies all image features that have a known run profile as defined in the bitmap 30, where the known run profile is the known run profile of the mark constitutes MC of the security mark SM. Each identified image feature having the known run profile is referred to herein as a "suspect component" SC (examples of suspect components SC are shown in FIG. 5B). Once each suspect component SC in the bitmap 30 has been identified, each suspect component SC is further examined by sub-steps S3b-1,S3b-2 to determine if the suspect component is a potential mark constituent. Referring also now to FIGURE 6B, the sub-step S3b-1 performs a size-checking operation on each suspect component SC to determine if either its column width X or row height Y either exceeds or fails to meet the size of a mark constituent MC. If the suspect component SC under consideration by the sub-step S3b-1 is too large or too small in either dimension, it is bypassed. Preferably, the size checking sub-step S3b-1 compares the width/height dimensions of each suspect component SC to acceptable width/height size ranges rather than a select fixed value to account for printing, scanning, and other minor size variations.

Each suspect component SC that satisfies the size requirements of the sub-step S3b-1 must also survive a template-matching sub-step S3b-2 wherein the suspect component SC is compared to and must match at least one template of an actual mark constituent MC in order for the suspect component to be deemed a potential mark constituent PMC. This template-matching operation is diagrammatically illustrated in FIGURE 6C. Both of the suspect components SC1 and SC2 satisfy the size checking sub-step S3b-1. Thus, each is then compared to a template 40 including a plurality of cells 42. Certain cells 42 of the template 40 are target cells 44, arranged in the shape and size of a mark constituent MC. In order for a connected component SC1,SC2 to match a template, the template compared with the suspect component, and at least a minimum percentage of the target cells 44 must match or correspond to the pixels 34 defining the suspect component SC1,SC2. Again, to account for printing, scanning, and other noise and variations, a perfect template match is typically not required. In FIGURE 6C, the suspect component SC1 matches the template 40, while the suspect component SC2 does not. Accordingly, the sub-step S3c identifies only the suspect component SC1 (and all other suspect components that satisfy the template-matching operation S3b-2) as a potential mark constituent PMC. FIG. 6F shows all suspect components SC of the example bitmap 30 that have been identified as potential mark constituents PMC.

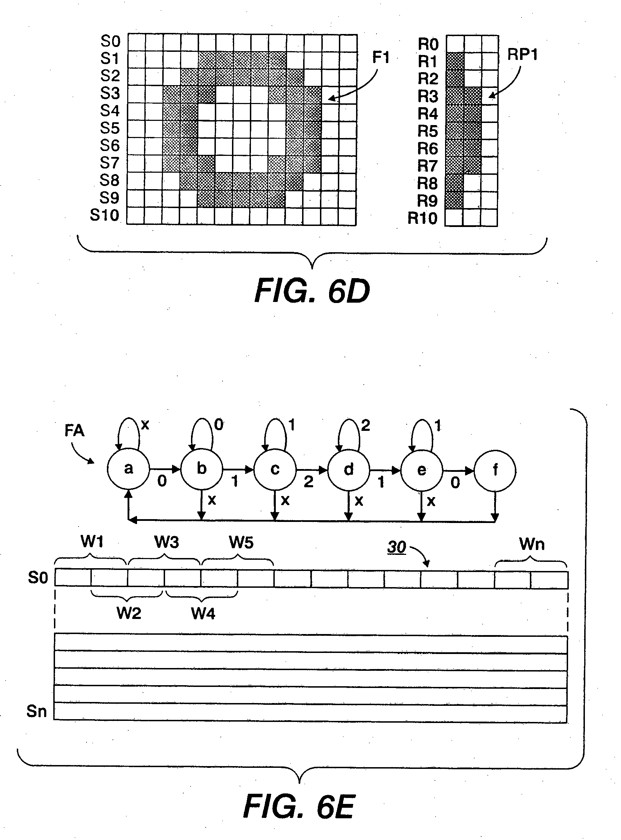

As just noted, the step S3a identifies all features 34 of the bitmap 30 that have a specific "run profile." A "run profile" is an analysis of each consecutive scanline of an image feature to determine the number of uninterrupted runs of "on" pixels. As a default setting, a run must have at least one "on" pixel to be counted, but more stringent noise filtering settings can be used, e.g., a minimum run length of two or more "on" pixels in order to be counted as a "run." The run profile detection operation S3a is illustrated with reference to FIGS. 6D as an example. FIG. 6D shows eleven consecutive partial (13 pixel) scanlines S0 - S10 of digital image data that define an image feature F1. The corresponding run profile RP1 for the image feature F1 is also shown and includes lines R0 - R10 that correspond respectively to the scanlines S0 - S10 of the image feature F1. The scanlines S0 and S10 have zero runs of "on" pixels and, thus, the corresponding lines R0 and R10 show zero "on" pixels. The scanlines S1 and S2 and S8 and S9 each have only one run of "on" pixels and, thus, the corresponding lines R1,R2,R8,R9 show one "on" pixel. The scanlines S3 - S7 each have two separate runs of "on" pixels and, thus, the corresponding lines R3 - R7 show two "on" pixels. The run profile RP1 thus has the illustrated shape.

The run profile analysis can be implemented using a variety of different techniques. One suitable technique involves using a finite automaton FA as shown in FIG. 6E. The finite automaton FA is set to identify all image features of the bitmap that have a run profile RP1 as shown, i.e., 0,1,1,2,2,2,2,2,1,1,0, but any other run profile can be detected by altering the rules of the finite automaton as will be well understood by those of ordinary skill in the art. Each scanline S0 — Sn of the bitmap 30 is processed by overlapping windows W1 -Wn and each window is associated with a finite automaton FA as shown, to track the contents of the window as the window processes successive scanlines of data. Each window W1-Wn has only a single scanline height, but a has width that encompasses N pixels of the bitmap scanline. Also, each window W1-Wn is used to examine the same N pixels in each successive scanline, i.e., each window W1-Wn processes a column of multiple pixels in a row-by-row fashion.

Operation of all windows W1-Wn and their respective associated finite automatons are described with reference to the window W1, and its associated finite automaton FA. The state of the window W1/finite automaton FA is initialized to "a" at the beginning of processing. The window W1 moves from its position in the first scanline S0 to the same position in the next consecutive scanline S1, and so on from scanline to scanline for the entire bitmap 30, and the pixel contents of the window W1 are examined at each position. The state for the window W1 / finite automaton FA remains at the initial "a" level until the window includes pixels with zero runs, at which time the state of the window advances to "b" as shown. The state remains as "b" as the window position progresses from scanline to scanline as long as zero pixel runs are detected in the window. The state advances to "c" if one pixel run is detected in the window and, for any other number of pixel runs detected in the window except zero or one, the state fails and returns to "'a", e.g., if two pixel runs are detected in the window W1. The state will advance from "c" to "d" only when the window W1 includes two pixel runs (assuming no prior failure), and will then advance from "d" to "e" only when one pixel run is again detected in the window and, finally, the state will advance to "f" if zero pixel runs are again detected in the window W1. In each case, the state returns to "a" for any change in the window contents other than the change required to advance the state. As such, the state can only advance fully to "f" if the window W1 encounters a successive group of scanlines S0-Sn in the bitmap in which a group of "on" pixels are found that define the run profile RP1.

As noted, the windows W1-Wn have a size of 1 x N where N is the number of pixels from a scanline S0-Sn. The windows W1-Wn are sized and centered to overlap to ensure that a mark constituent MC represented in the bitmap 30 will not be improperly analyzed in terms of its run profile by being partially analyzed in one window and partially analyzed in another window and to ensure that a window is not too large so as to contain any neighboring data that would alter the run profile. For example, if the mark constituents MC are known to be circular and have a maximum diameter D and are spaced (edge-to-edge) at least a minimum number of pixels p from each other, the window size N and center-spacing M of the windows can be expressed according to:

$$D + M - 1 \leq N \leq D - M + 1 + 2p$$

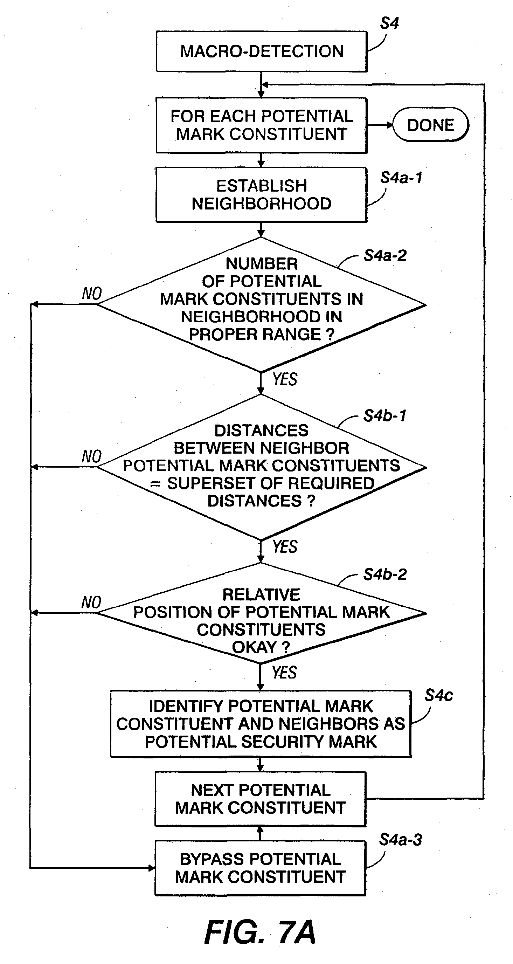

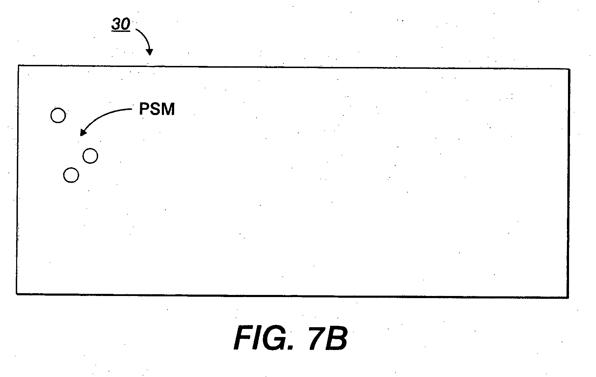

As noted, FIG. 6F shows all potential mark constituents identified in the bitmap 30 using the above methods. Referring now to FIGURES 7A and 7B, the bitmap 30 is further processed according to the macro-detection operation S4 in an effort to determine which, if any, of the potential mark constituents PMC, together with other potential mark constituents PMC, defines a potential security mark PSM. As noted with reference to FIGURE 2C, an actual security mark SM is defined by mark constituents MC arranged in a specific pattern and spaced from each other by the distances D1,D2,D3.

Using this information, which is obtained from the definition of the security mark SM, and for each potential mark constituent PMC, the sub-step S4a-1 establishes a neighborhood about the potential mark constituent having a radius equal to or minimally larger than the maximum of the distances D1,D2,D3. A sub-step S4a-2 determines the number of potential mark constituents PMC in the neighborhood, including the central or main potential mark constituent about which the neighborhood is established. The sub-step S4a-2 compares the number of potential mark constituents in the neighborhood to the number required to define a security mark. If a neighborhood has too many or too few potential mark constituents compared to the number required to define a security mark (allowing for the possibility that some potential mark constituents are erroneous or noise), a sub-step S4a-3 disregards or bypasses the potential mark constituent about which the neighborhood is based, and another potential mark constituent PMC is examined beginning at the sub-step S4a-1.

On the other hand, if the neighborhood established about a potential mark constituent PMC includes the number of potential mark constituents required to define a security mark SM, the neighborhood is further examined by the sub-step S4b-1. To account for the presence of "noise" potential mark constituents PMC, a neighborhood with one or two extra potential mark constituents relative to the number required to define a security mark SM is deemed to satisfy the sub-step S4a-2 so as to be further processed by the sub-step S4b-1 rather than discarded.

For neighborhoods having an acceptable number of potential mark constituents PMC, the sub-step S4b-1 determines the distances between each potential mark constituent and its neighbors. The sub-step S4b-1 then compares these distances to the predefined distances D1,D2,D3 of the security mark SM. The distances between potential mark constituents PMC in a neighborhood must equal or be a superset of the distances D1,D2,D3 plus or minus a margin of error to account for printing, scanning, or other variations. If not, the sub-step S4a-3 disregards or bypasses the potential mark constituent PMC about which the neighborhood is based, and the next potential mark constituent is examined beginning with the sub-step S4a-1.

However, if the distances between potential mark constituents PMC in a neighborhood equal or are a superset of the distances D1,D2,D3, a sub-step S4b-2 discards any noise potential mark constituents PMC in the neighborhood and determines the position of the remaining potential mark constituents PMC in the neighborhood relative to each other and compares same to the relative position of the mark constituents MC defining an actual security mark SM. More particularly, the sub-step S4b-2 identifies and then discards noise potential mark constituents PMC from a neighborhood based upon the distances determined by the sub-step S4b-1. Any potential mark constituents PMC not relevant to the result of obtaining the distances D1,D2,D3 is deemed to be noise and discarded.

The sub-step S4b-2 determines the relative positions of the potential mark constituents PMC in a neighborhood, and compares same to the security mark SM using any other wide variety of methods. A preferred method, which operates independent of any rotation or other shift due to scanning variations at the image input scanner 12 is to use the distances as determined by the sub-step S4b-1. In such case, the potential mark constituents PMC in the neighborhood are examined to determine if the distances separating the potential mark constituents are arranged in the same sequence as the distances D1,D2,D3 of a security mark SM. Such a method operates independently of the vertical, lateral, or rotational placement of the potential mark constituents PMC in the bitmap 30. By way of example, two neighborhoods 50,52 (FIGURE 6F) of potential mark constituents PMC satisfy the distance requirements of the sub-step S4b-1. However, when the sub-step S4b-2 examines the relative positions of the potential mark constituents PMC of each neighborhood 50,52, only the neighborhood 50 satisfies the requirement that the potential mark constituents PMC be positioned relative to each other as illustrated in FIGURE 2C — with the distances D1,D2,D3 encountered sequentially when the potential mark constituents PMC are examined in a clockwise order. In an alternative embodiment, each potential security mark PSM is matched against a series of security mark templates, wherein the templates are devised so that, if the potential security mark represents an actual security mark, one template will be matched regardless of any rotational shift of the constituents of the potential security mark - i.e., the entire potential security mark will be compared to a template of an actual security mark, wherein the templates encompass every possible rotational arrangement in which the constituents of the potential security mark could define an actual security mark.

If a neighborhood does not satisfy the sub-step S4b-2, the sub-step S4a-3 bypasses the potential mark constituent PMC about which the neighborhood is established and another potential mark constituent PMC is processed beginning with the sub-step S4a-1. On the other hand, if a neighborhood satisfies the sub-step S4b-2, the sub-step S4c identifies the neighborhood as a potential security mark PSM (FIGURE 7B), and processing in accordance with the macro-detection operation S4 continues at S4a-1 for the next potential mark constituent PMC not already part of a potential security mark PSM.

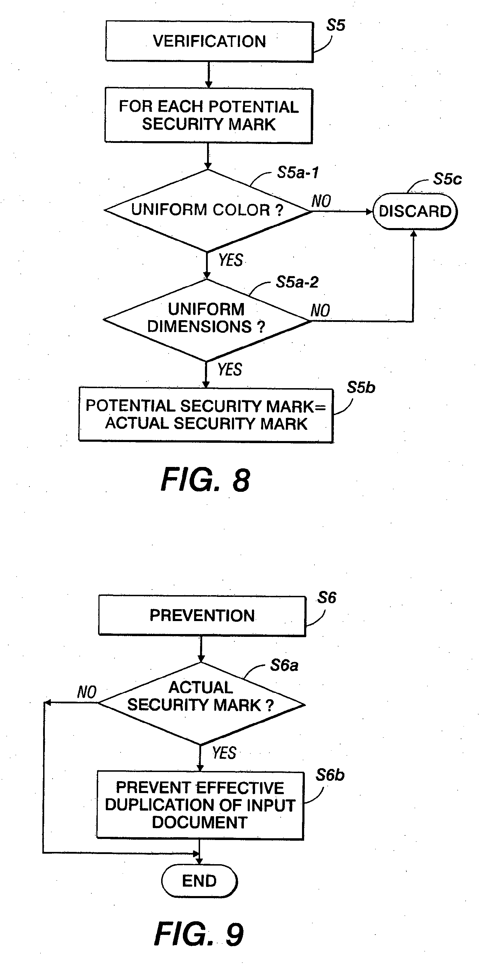

If the macro-detection operation S4 results in the identification of any potential security marks PSM, processing continues with a verification operation S5 in accordance with the present invention as illustrated in FIGURE 8. Because the binarization S2, micro-detection S3, and macro-detection S4 operations all preferably rely upon "ranges" or otherwise allow some variation in connection with the identification of potential mark constituents and potential security marks in terms of color, size, shape, and the like, it is possible that one or more of the potential mark constituents PMC defining a potential security mark PSM are not actual mark constituents MC. Of course, in such case, the potential security mark PSM would not be an actual security mark SM. Thus, to ensure that a potential security mark PSM is an actual security mark SM, the potential security mark is subjected to a verification operation S5 in accordance with the present development. More particularly, for each potential security mark PSM, a verification sub-step S5a-1 examines the color of each potential mark constituent PMC defining the potential security mark PSM, and determines if the color of each potential mark constituent is sufficiently close to or uniform with the color of the other potential mark constituents PMC defining the potential security mark PSM. It is preferred that the potential mark constituents have a color that is equal or close to each other. For example, if two potential mark constituents PMC have respective colors that fall within the color range used in the binarization color-checking sub-step S2a, but the respective colors thereof are found at extreme opposite ends of the acceptable color range, such potential mark constituents will not be deemed to exhibit sufficient color uniformity relative to each other to be actual mark constituents MC. Any potential security marks PSM not satisfying the color uniformity verification sub-step S5a-1 are discarded by the sub-step S5c.

For potential security marks PSM satisfying the color uniformity verification sub-step S5a-1, a dimensional uniformity verification sub-step S5a-2 examines the potential mark constituents PMC for dimensional uniformity relative to each other. The dimensional uniformity verification sub-step S5a-2 examines the column width and/or row height of each potential mark constituent PMC defining the potential security mark PSM for purposes of ensuring that the dimensions of the potential mark constituents are consistent relative to each other. Again, for example, if one potential mark constituent PMC exhibits dimensional characteristics relative to other potential mark constituents that vary by +/- 5%, the potential mark constituent will fail the dimensional uniformity verification sub-step S5a-2, and the sub-step S5c will discard the relevant potential security mark PSM. If the potential mark constituents PMC defining a potential security mark PSM satisfy the verification operation S5, a sub-step S5B identifies the potential security mark PSM as an actual security mark SM.

Subsequent to the verification operation S5, a prevention operation S6 operates to prevent effective reproduction of the document scanned by the image input scanner 12. A sub-step S6a determines if an actual security mark SM has been identified as present in the document being scanned by the input scanner 12. If no security mark SM has been found, reproduction of the document is permitted. If, on the other hand, a security mark SM is identified, a prevention sub-step S6b prevents effective duplication of the document scanned by the input scanner 12. This is accomplished using one or more suitable prevention operations such as disabling the image output device 16, not sending output data from the image processing unit 14 to the image output device 16, embedding or otherwise including a message (such as VOID) in the image data sent to the image output device 16 so that the message is visible in the document reproduction, or by any other suitable method that prevents an effective reproduction of the document scanned by the input scanner 12.

## Claims

1. A digital image processing method for preventing unauthorized reproduction of a printed document including a security mark defined in terms of a plurality of actual mark constituents having a known quantity, a known color, known dimensions, a known run profile, and arranged in a known pattern relative to each other, said method comprising:

   a. scanning said printed document to derive color digital data representing said printed document, said color digital data defined in terms of a plurality of pixels each having a color value;
   b. identifying all pixels of said color digital data having a color value representing a color at least approximating said known color of said plurality of actual mark constituents;
   c. constructing a binary map of said color digital data defined in terms of "on" and "off" pixels, said "on" pixels corresponding to said identified pixels of said color digital data having color values at least approximating said known color of said plurality of actual mark constituents;
   d. processing said binary map to identify and examine all suspect components, wherein said processing comprises: (i) determining a run profile for features represented in said digital image data, wherein a minimum number of uninterrupted "on" pixels for a run to be counted is adjustable and wherein a run profile is being defined as an analysis of consecutive scanlines of an image feature to determine the number of uninterrupted runs of "on" pixels; (ii) comparing said run profile for each feature to the known run profile of an actual mark constituent to identify suspect components, wherein only features having said known run profile are identified as suspect components; and, (iii) examining each suspect component to identify any suspect component that are potential actual mark constituents;
   e. using said binary map, identifying at least one neighborhood of plural potential mark constituents together defining a potential security mark;
   f. identifying said potential security mark as an actual security mark if said potential mark constituents thereof are uniform relative to each other in terms of at least color and size; and
   g. preventing effective duplication of said printed document if an actual security mark is identified.

2. The digital image processing method as set forth in claim 1, wherein said step (d)(iii) comprises:

   comparing dimensions of each suspect component to the known dimensions of an actual mark constituent; and
   identifying a suspect component as a potential mark constituent only if the dimensions of said suspect component correspond to the known dimensions of an actual mark constituent.

3. The digital image processing method as set forth in claim 2, wherein said step of comparing the dimensions of each suspect component to the known dimensions of an actual mark constituent comprises:

   comparing a width of the suspect component to minimum and maximum width values of an actual mark constituent; and
   comparing a height of the suspect component to minimum and maximum height values of an actual mark constituent.

**4.** The digital image processing method as set forth in claim 3, wherein said step of comparing dimensions of each suspect component to the known dimensions of an actual mark constituent further comprises:

only for each suspect component having a width encompassed by said minimum and maximum width values and having a height encompassed by said minimum and maximum height values, comparing the suspect component to at least one template, wherein said suspect component is identified as a potential mark constituent if said suspect component matches said at least one template.

**5.** The digital image processing method of one of the preceding claims, wherein the step (e) comprises, for each potential mark constituent:

establishing a neighborhood about the potential mark constituent;
counting the number of potential mark constituents located in the neighborhood; comparing the number of potential mark constituents in the neighborhood to the known quantity of potential mark constituents used to define an actual security mark; and
identifying a neighborhood as a potential security mark if the number of potential mark constituents therein is equal to or greater than the number of actual mark constituents required to define an actual security mark.

**6.** The digital image processing method of claim 5, wherein said neighborhood established about each potential mark constituent has a radius based upon a predefined maximum distance between any two actual mark constituents defining an actual security mark in said printed document.

**7.** The digital image processing method of one of claims 5 and 6, wherein said digital image processing method further comprises, prior to identifying a neighborhood as a potential security mark:

determining the distances between potential mark constituents in said neighborhood; and
identifying a neighborhood as a potential security mark only if the distances between potential mark constituents define a superset of distances between actual mark constituents of an actual security mark in said printed document.

**8.** A document reproduction apparatus adapted for preventing unauthorized reproduction of a printed document including a security mark comprising:

a. means for scanning said printed document to derive color digital data representing said printed document, said color digital data defined in terms of a plurality of pixels each having a color value;
b. means for identifying all pixels of said color digital data having a color value representing a color at least approximating said known color of said plurality of actual mark constituents;
c. means for constructing a binary map of said color digital data defined in terms of "on" and "off" pixels, said "on" pixels corresponding to said identified pixels of said color digital data having color values at least approximating said known color of said plurality of actual mark constituents;
d. means for processing said binary map to identify and examine all suspect components, wherein said processing comprises: (i) determining a run profile for features represented in said digital image data, wherein a minimum number of uninterrupted "on" pixels for a run to be counted is adjustable and wherein a run profile is being defined as an analysis of consecutive scanlines of an image feature to determine the number of uninterrupted runs of "on" pixels; (ii) comparing said run profile for each feature to the known run profile of an actual mark constituent to identify suspect components, wherein only features having said known run profile are identified as suspect components; and, (iii) examining each suspect component to identify any suspect component that are potential actual mark constituents;
e. means for identifying at least one neighborhood of plural potential mark constituents together defining a potential security mark using said binary map;
f. means for identifying said potential security mark as an actual security mark if said potential mark constituents thereof are uniform relative to each other in terms of at least color and size; and
g. means for preventing effective duplication of said printed document if an actual security mark is identified.

**Patentansprüche**

**1.** Digitales Bildbearbeitungsverfahren zum Verhindern unbefugter Vervielfältigung eines gedruckten Dokumentes, das ein Sicherheitsmerkmal enthält, das durch eine Vielzahl tatsächlicher Merkmal-Elemente definiert wird, die eine bekannte Menge, eine bekannte Farbe, bekannte Abmessungen sowie ein bekanntes Verlaufprofil aufweisen und in einem bekannten Muster relativ zueinander angeordnet sind, wobei das Verfahren umfasst:

a) Abtasten des gedruckten Dokumentes, um Farb-Digitaldaten herzuleiten, die das gedruckte Dokument repräsentieren, wobei die Farb-Digitaldaten durch eine Vielzahl von Pixeln definiert werden, die jeweils einen Farbwert haben;

b) Identifizieren aller Pixel der Farb-Digitaldaten, die einen Farbwert haben, der eine Farbe repräsentiert, die wenigstens annähernd der bekannten Farbe der Vielzahl tatsächlicher Merkmal-Elemente entspricht;

c) Konstruieren einer Binär-Map der Farb-Digitaldaten, die durch "An"- und "Aus"-Pixel definiert werden, wobei die "An"-Pixel den identifizierten Pixeln der Farb-Digitaldaten entsprechen, die Farbwerte haben, die wenigstens annähernd der bekannten Farbe der Vielzahl tatsächlicher Merkmal-Elemente entsprechen;

d) Verarbeiten der Binär-Map, um alle verdächtigen Komponenten zu identifizieren und zu prüfen, wobei das Verarbeiten umfasst: 1) Bestimmen eines Verlaufprofils für Strukturen, die in den digitalen Bilddaten repräsentiert sind, wobei eine minimale Anzahl ununterbrochener "An"-Pixel für einen zu zählenden Verlauf angepasst werden kann und ein Verlaufprofil als eine Analyse aufeinanderfolgender Abtastzeilen einer Bildstruktur zum Bestimmen der Anzahl ununterbrochener Verläufe von "An"-Pixeln definiert ist; 2) Vergleichen des Verlaufprofils für jede Struktur mit dem bekannten Verlaufprofil eines tatsächlichen Merkmal-Elementes, um verdächtige Komponenten zu identifizieren, wobei nur Strukturen, die das bekannte Verlaufprofil aufweisen, als verdächtige Komponenten identifiziert werden; und 3) Prüfen jeder verdächtigen Komponente, um alle verdächtigen Komponenten zu identifizieren, die potenzielle tatsächliche Merkmal-Elemente sind;

e) Identifizieren wenigstens einer Umgebung mehrerer potenzieller Merkmal-Elemente, die zusammen ein potenziales Sicherheitsmerkmal definieren, unter Verwendung der Binär-Map;

f) Identifizieren des potenziellen Sicherheitsmerkmals als ein tatsächliches Sicherheitsmerkmal, wenn die potenziellen Merkmal-Elemente desselben relativ zueinander wenigstens hinsichtlich Form und Größe einheitlich sind; und

g) Verhindern wirksamer Vervielfältigung des gedruckten Dokumentes, wenn ein tatsächliches Sicherheitsmerkmal identifiziert wird.

2.  Digitales Bildverarbeitungsverfahren nach Anspruch 1, wobei der Schritt d) 3) umfasst:

Vergleichen von Abmessungen jeder verdächtigen Komponente mit den bekannten Abmessungen eines tatsächlichen Merkmal-Elementes; und

Identifizieren einer verdächtigen Komponente als ein potenzielles Merkmal-Element nur dann, wenn die Abmessungen der verdächtigen Komponente den bekannten Abmessungen eines tatsächlichen Merkmal-Elementes entsprechen.

3.  Digitales Bildverarbeitungsverfahren nach Anspruch 2, wobei der Schritt des Vergleichens der Abmessungen jeder verdächtigen Komponente mit den bekannten Abmessungen eines tatsächlichen Merkmal-Elementes umfasst:

Vergleichen einer Breite der verdächtigen Komponente mit einem minimalen und einem maximalen Breiten-Wert eines tatsächlichen Merkmal-Elementes; und

Vergleichen einer Höhe der verdächtigen Komponente mit einem minimalen und einem maximalen Höhen-Wert eines tatsächlichen Merkmal-Elementes.

4.  Digitales Bildverarbeitungsverfahren nach Anspruch 3, wobei der Schritt des Vergleichens von Abmessungen jeder verdächtigen Komponente mit den bekannten Abmessungen eines tatsächlichen Merkmal-Elementes des Weiteren umfasst:

Vergleichen der verdächtigen Komponente mit wenigstens einer Vorlage nur für jede verdächtige Komponente, die eine Breite hat, die von dem minimalen und dem maximalen Breiten-Wert umschlossen wird, und eine Höhe hat, die von dem minimalen und dem maximalen Höhen-Wert umschlossen wird, wobei die verdächtige Komponente als ein potenzielles Merkmal-Element identifiziert wird, wenn die verdächtige Komponente der wenigstens einen Vorlage entspricht.

5.  Digitales Bildverarbeitungsverfahren nach einem der vorangehenden Ansprüche, wobei der Schritt e) für jedes potenzielle Merkmal-Element umfasst:

Einrichten einer Umgebung um das potenzielle Merkmal-Element herum;

Zählen der Anzahl potenzieller Merkmal-Elemente, die sich in der Umgebung befinden;

Vergleichen der Anzahl potenzieller Merkmal-Elemente in der Umgebung mit der bekannten Menge potenzieller Merkmal-Elemente, die eingesetzt werden, um ein tatsächliches Sicherheitsmerkmal zu definieren; und

Identifizieren einer Umgebung als ein potenzielles Sicherheitsmerkmal, wenn die Anzahl potenzieller Merkmal-Elemente darin genauso groß ist wie oder größer als die Anzahl tatsächlicher Merkmal-Elemente, die erforderlich ist, um ein tatsächliches Sicherheitsmerkmal zu definieren.

6. Digitales Bildverarbeitungsverfahren nach Anspruch 5, wobei die um jedes potentielle Merkmal-Element herum eingerichtete Umgebung einen Radius hat, der auf einem vordefinierten maximalen Abstand zwischen beliebigen zwei tatsächlichen Merkmal-Elementen basiert, die ein tatsächliches Sicherheitsmerkmal in dem gedruckten Dokument definieren.

7. Digitales Bildverarbeitungsverfahren nach einem der Ansprüche 5 und 6, wobei das digitale Bildverarbeitungsverfahren des Weiteren vor dem Identifizieren einer Umgebung als ein potenzielles Sicherheitsmerkmal umfasst:

Bestimmen der Abstände zwischen potenziellen Merkmal-Elementen in der Umgebung; und

Identifizieren einer Umgebung als ein potenzielles Sicherheitsmerkmal nur dann, wenn die Abstände zwischen potenziellen Merkmal-Elementen eine Obermenge von Abständen zwischen tatsächlichen Merkmal-Elementen eines tatsächlichen Sicherheitsmerkmals in dem gedruckten Dokument bilden.

8. Dokumenten-Vervielfältigungsvorrichtung, die so eingerichtet ist, dass sie unbefugte Vervielfältigung eines gedruckten Dokumentes verhindert, das ein Sicherheitsmerkmal enthält, wobei sie umfasst:

a) eine Einrichtung, mit der das gedruckte Dokument abgetastet wird, um Farb-Digitaldaten herzuleiten, die das gedruckte Dokument repräsentieren, wobei die Farb-Digitaldaten durch eine Vielzahl von Pixeln definiert werden, die jeweils einen Farbwert haben;

b) eine Einrichtung, mit der alle Pixel der Farb-Digitaldaten identifiziert werden, die einen Farbwert haben, der eine Farbe repräsentiert, die wenigstens annähernd der bekannten Farbe der Vielzahl tatsächlicher Merkmal-Elemente entspricht;

c) eine Einrichtung, mit der eine Binär-Map der Farb-Digitaldaten konstruiert wird, die durch "An"- und "Aus"-Pixel definiert werden, wobei die "An"-Pixel den identifizierten Pixeln der Farb-Digitaldaten entsprechen, die Farbwerte haben, die wenigstens annähernd der bekannten Farbe tatsächlicher Merkmal-Elemente entsprechen;

d) eine Einrichtung, mit der die Binär-Map verarbeitet wird, um alle verdächtigen Komponenten zu identifizieren und zu prüfen, wobei das Verarbeiten umfasst: 1) Bestimmen eines Verlaufprofils für Strukturen, die in den digitalen Bilddaten repräsentiert sind, wobei eine minimale Anzahl ununterbrochener "An"-Pixel für einen zu zählenden Verlauf angepasst werden kann und ein Verlaufprofil als eine Analyse aufeinanderfolgender Abtastzeilen einer Bildstruktur zum Bestimmen der Anzahl ununterbrochener Verläufe von "An"-Pixeln definiert ist; 2) Vergleichen des Verlaufprofils für jede Struktur mit dem bekannten Verlaufprofil eines tatsächlichen Merkmal-Elementes, um verdächtige Komponenten zu identifizieren, wobei nur Strukturen, die das bekannte Verlaufprofil aufweisen, als verdächtige Komponenten identifiziert werden; und 3) Prüfen jeder verdächtigen Komponente, um alle verdächtigen Komponenten zu identifizieren, die potenzielle tatsächliche Merkmal-Elemente sind;

e) eine Einrichtung, mit der wenigstens eine Umgebung mehrerer potenzieller Merkmal-Elemente, die zusammen ein potenzielles Sicherheitsmerkmal definieren, unter Verwendung der Binär-Map identifiziert wird;

f) eine Einrichtung, mit der das potenzielle Sicherheitsmerkmal als ein tatsächliches Sicherheitsmerkmal identifiziert wird, wenn die potenziellen Merkmal-Elemente desselben relativ zueinander wenigstens hinsichtlich Farbe und Größe einheitlich sind; und

g) eine Einrichtung, mit der wirksame Vervielfältigung des gedruckten Dokumentes verhindert wird, wenn ein tatsächliches Sicherheitsmerkmal identifiziert wird.

**Revendications**

1. Procédé de traitement d'image numérique destiné à empêcher une reproduction non-autorisée d'un document imprimé comportant une marque de sécurité définie en termes d'une pluralité de constituants de marque réelle ayant une quantité connue, une couleur connue, des dimensions connues, un profil de plage connu, et agencés les uns par rapport aux autres selon une configuration connue, ledit procédé comprenant le fait de :

a. balayer ledit document imprimé pour obtenir des données numériques de couleur représentant ledit document imprimé, lesdites données numériques de couleur étant définies en termes d'une pluralité de pixels ayant chacune une valeur de couleur ;

b. identifier tous les pixels desdites données numériques de couleur ayant une valeur de couleur représentant une couleur qui se rapproche au moins de ladite couleur connue de ladite pluralité de constituants de marque réelle ;

c. construire une carte binaire desdites données numériques de couleur définies en termes de pixels « actifs » et « inactifs », lesdits pixels « actifs » correspondant auxdits pixels identifiés desdites données numériques de couleur ayant des valeurs de couleur qui se rapprochent au moins de ladite couleur connue de ladite pluralité de constituants de marque réelle ;

d. traiter ladite carte binaire pour identifier et examiner tous les composants suspects, où ledit traitement comprend le fait de : (i) déterminer un profil de plage pour des caractéristiques représentées dans lesdites données d'image numérique, où un nombre minimal de pixels « actifs » ininterrompus pour une plage à compter est réglable et où un profil de plage est défini comme étant une analyse de lignes de balayage consécutives d'une caractéristique d'image pour déterminer le nombre de plages ininterrompues de pixels « actifs » ; (ii) comparer ledit profil de plage pour chaque caractéristique au profil de plage connu d'un constituant de marque réelle pour identifier des composants suspects, où seules les caractéristiques ayant ledit profil de plage connu sont identifiées comme étant des composants suspects ; et, (iii) examiner chaque composant suspect pour identifier tous composants suspects qui sont des constituants de marque réelle et potentielle ;

e. utiliser ladite carte binaire, identifier au moins un voisinage de plusieurs constituants de marque potentielle ensemble définissant une marque de sécurité potentielle ;

f. identifier ladite marque de sécurité potentielle comme étant une marque de sécurité réelle si lesdits constituants de marque potentielle de celle-ci sont uniformes les uns par rapport aux autres en termes d'au moins la couleur et la taille ; et

g. empêcher une duplication efficace dudit document imprimé si une marque de sécurité réelle est identifiée.

2. Procédé de traitement d'image numérique selon la revendication 1, dans lequel ladite étape (d) (iii) comprend le fait de :

comparer les dimensions de chaque composant suspect aux dimensions connues d'un constituant de marque réelle ; et

identifier un composant suspect comme étant un constituant de marque potentielle uniquement si les dimensions dudit composant suspect correspondent aux dimensions connues d'un constituant de marque réelle.

3. Procédé de traitement d'image numérique selon la revendication 2, dans lequel ladite étape consistant à comparer les dimensions de chaque composant suspect aux dimensions connues d'un constituant de marque réelle comprend le fait de :

comparer une largeur du composant suspect à des valeurs de largeur minimale et maximale d'un constituant de marque réelle ; et

comparer une hauteur du composant suspect à des valeurs de hauteur minimale et maximale d'un constituant de marque réelle.

4. Procédé de traitement d'image numérique selon la revendication 3, dans lequel ladite étape consistant à comparer les dimensions de chaque composant suspect aux dimensions connues d'un constituant de marque réelle comprend en outre le fait de :

comparer, uniquement pour chaque composant suspect ayant une largeur inscrite dans lesdites valeurs de largeur minimale et maximale et ayant une hauteur inscrite dans lesdites valeurs de hauteur minimale et maximale, le composant suspect à au moins un modèle, où ledit composant suspect est identifié comme étant un constituant de marque potentielle si ledit composant suspect s'accorde avec ledit au moins un modèle.

5. Procédé de traitement d'image numérique de l'une des revendications précédentes, dans lequel l'étape/les étapes comprend/comprennent, pour chaque constituant de marque potentielle, le fait de :

établir un voisinage autour du constituant de marque potentielle ;

compter le nombre de constituants de marque potentielle situés dans le voisinage ; comparer le nombre de constituants de marque potentielle dans le voisinage à la quantité connue de constituants de marque potentielle utilisés pour définir une marque de sécurité réelle ; et

identifier un voisinage comme étant une marque de sécurité potentielle si le nombre de constituants de marque potentielle y est supérieur ou égal au nombre de constituants de marque réelle nécessaires pour définir une marque de sécurité réelle.

6. Procédé de traitement d'image numérique de la revendication 5, dans lequel ledit voisinage établi autour de chaque constituant de marque potentielle a un rayon basé sur une distance maximale prédéfinie entre deux constituants de marque réelle quelconques définissant une marque de sécurité réelle dans ledit document imprimé.

7. Procédé de traitement d'image numérique de l'une des revendications 5 et 6, dans lequel ledit procédé de traitement d'image numérique comprend en outre, avant l'identification d'un voisinage comme étant une marque de sécurité potentielle, le fait de :

déterminer les distances entre des constituants de marque potentielle dans ledit voisinage ; et

identifier un voisinage comme étant une marque de sécurité potentielle uniquement si les distances entre les constituants de marque potentielle définissent un sur-ensemble de distances entre des constituants de marque réelle d'une marque de sécurité réelle dans ledit document imprimé.

8. Appareil de reproduction de document adapté pour empêcher la reproduction non-autorisée d'un document imprimé comportant une marque de sécurité comprenant :

a. un moyen pour balayer ledit document imprimé pour obtenir des données numériques de couleur représentant ledit document imprimé, lesdites données numériques de couleur étant définies en termes d'une pluralité de pixels ayant chacune une valeur de couleur ;

b. un moyen pour identifier tous les pixels desdites données numériques de couleur ayant une valeur de couleur représentant une couleur qui se rapproche au moins de ladite couleur connue de ladite pluralité de constituants de marque réelle ;

c. un moyen pour construire une carte binaire desdites données numériques de couleur définies en termes de pixels « actifs » et « inactifs », lesdits pixels « actifs » correspondant auxdits pixels identifiés desdites données numériques de couleur ayant des valeurs de couleur qui se rapprochent au moins de ladite couleur connue de ladite pluralité de constituants de marque réelle ;

d. un moyen pour traiter ladite carte binaire pour identifier et examiner tous les composants suspects, où ledit traitement comprend le fait de : (i) déterminer un profil de plage pour des caractéristiques représentées dans lesdites données d'image numérique, où un nombre minimal de pixels « actifs » ininterrompus pour une plage à compter est réglable et où un profil de plage est défini comme étant une analyse de lignes de balayage consécutives d'une caractéristique d'image pour déterminer le nombre de plages ininterrompues de pixels « actifs » ; (ii) comparer ledit profil de plage pour chaque caractéristique au profil de plage connu d'un constituant de marque réelle pour identifier des composants suspects, où seules les caractéristiques ayant ledit profil de plage connu sont identifiées comme étant des composants suspects ; et, (iii) examiner chaque composant suspect pour identifier tous composants suspects qui sont des constituants de marque réelle et potentielle ;

e. un moyen pour identifier au moins un voisinage de plusieurs constituants de marque potentielle ensemble définissant une marque de sécurité potentielle utilisant ladite carte binaire ;

f. un moyen pour identifier ladite marque de sécurité potentielle comme étant une marque de sécurité réelle si lesdits constituants de marque potentielle de celle-ci sont uniformes les uns par rapport aux autres en termes d'au moins la couleur et la taille ; et

g. un moyen pour empêcher une duplication efficace dudit document imprimé si une marque de sécurité réelle est identifiée.

_10_

_16_

_12_

_14_

| SCANNER | → | IPU | → | DISPLAY |
|---------|---|-----|---|---------|

PRINTER

IMAGE STORAGE

## FIG. 1

*FIG. 2A*

*FIG. 2B*

*FIG. 2C*

S1

OBTAIN DIGITAL
INPUT IMAGE

S2

BINARIZATION

S3

MICRO-DETECTION

S4

MACRO-DETECTION

S5

VERIFICATION

S6

PREVENTION

## FIG. 3

FIG. 4

# FIG. 5A

```
                    ┌─────────────────────┐  S2
                    │    BINARIZATION     │
                    └─────────────────────┘
                              │
                              ▼
       ┌──────────────┌─────────────────────┐        ┌────────┐
       │              │   FOR EACH PIXEL    │───────▶│  DONE  │
       │              │    IN INPUT IMAGE   │        └────────┘
       │              └─────────────────────┘
       │                         │
       │                         ▼                S2a
       │                      ╱ IN  ╲
       │          NO        ╱ PROPER  ╲
 S2b-2 │    ◀──────────────  COLOR
       │                    ╲ RANGE ? ╱
┌──────────────────┐         ╲      ╱
│ SET CORRESPONDING│            │ YES
│ BITMAP PIXEL "OFF"│            ▼
└──────────────────┘   ┌─────────────────────┐  S2b-1
       │               │ SET CORRESPONDING   │
       │               │ BITMAP PIXEL "ON"   │
       │               └─────────────────────┘
       │                         │
       │                         ▼
       │               ┌─────────────────────┐
       │               │     NEXT PIXEL      │
       │               └─────────────────────┘
       │                         │
       └─────────────────────────┘
```

# FIG. 5B

# FIG. 6A

```
                    ┌──────────────────────────┐  S3
                    │    MICRO-DETECTION        │
                    └──────────────────────────┘
                                │
                                ▼
                    ┌──────────────────────────┐  S3a
                    │    IDENTIFY IMAGE         │
                    │   FEATURES HAVING         │
                    │  KNOWN RUN PROFILE        │
                    └──────────────────────────┘
                                │
                                ▼
                    ┌──────────────────────────┐         ╭─────────╮
                    │   FOR EACH SUSPECT        │────────▶│  DONE   │
                    │     COMPONENT             │         ╰─────────╯
                    └──────────────────────────┘
                                │
                                ▼              S3b-1
            NO              ◇ SIZE OKAY ? ◇
          ◀─────────────
                                │ YES
                                ▼              S3b-2
            NO              ◇ TEMPLATE ◇
          ◀─────────────     ◇ MATCH ? ◇
                                │ YES
                                ▼
                    ┌──────────────────────────┐  S3c
                    │ SUSPECT COMPONENT =       │
                    │     POTENTIAL             │
                    │  MARK CONSTITUENT         │
                    └──────────────────────────┘
                                │
                                ▼
                    ┌──────────────────────────┐
                    │    NEXT SUSPECT           │
                    │     COMPONENT             │
                    └──────────────────────────┘
```

_30_

X

Y

SC

*FIG. 6B*

42    **44**

_40_

_30_    SC1

= PMC

_30_    SC2

≠ PMC

*FIG. 6C*

## FIG. 6D

## FIG. 6E

**FIG. 6F**

```
                                          ┌──────────────┐  S4
                                          │ MACRO-DETECTION │
                                          └──────────────┘

                              ┌──────────────────┐
                              │ FOR EACH POTENTIAL │──→ ( DONE )
                              │ MARK CONSTITUENT   │
                              └──────────────────┘

                              ┌──────────────────┐  S4a-1
                              │   ESTABLISH        │
                              │  NEIGHBORHOOD      │
                              └──────────────────┘

                     NO          NUMBER           S4a-2
                    ◄────────  OF POTENTIAL
                              MARK CONSTITUENTS IN
                               NEIGHBORHOOD IN
                               PROPER RANGE ?
                                      │ YES

                     NO          DISTANCES          S4b-1
                    ◄────────  BETWEEN NEIGHBOR
                            POTENTIAL MARK CONSTITUENTS
                             = SUPERSET OF REQUIRED
                                 DISTANCES ?
                                      │ YES

                     NO          RELATIVE           S4b-2
                    ◄────────  POSITION OF POTENTIAL MARK
                               CONSTITUENTS
                                  OKAY ?
                                      │ YES

                       ┌─────────────────────────┐  S4c
                       │  IDENTIFY POTENTIAL MARK   │
                       │ CONSTITUENT AND NEIGHBORS AS│
                       │  POTENTIAL SECURITY MARK   │
                       └─────────────────────────┘

                          ┌──────────────────┐
                          │  NEXT POTENTIAL    │
                          │ MARK CONSTITUENT   │
                          └──────────────────┘

                          ┌──────────────────┐  S4a-3
                          │  BYPASS POTENTIAL  │
                          │ MARK CONSTITUENT   │
                          └──────────────────┘
```

# FIG. 7A

*30*

PSM

**FIG. 7B**

VERIFICATION — *S5*

FOR EACH POTENTIAL
SECURITY MARK

*S5a-1*

UNIFORM COLOR ? — NO → DISCARD — *S5c*

YES

*S5a-2*

UNIFORM
DIMENSIONS ? — NO

YES

POTENTIAL SECURITY MARK=
ACTUAL SECURITY MARK — *S5b*

## FIG. 8

PREVENTION — *S6*

*S6a*

ACTUAL
SECURITY MARK ? — NO

YES

PREVENT EFFECTIVE
DUPLICATION OF INPUT
DOCUMENT — *S6b*

END

## FIG. 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6580820 B
- EP 1059800 A
- US 6542629 B
- US 20050013599 A1
- US 6272248 B1